# EUROPEAN PATENT APPLICATION

(11) **EP 4 040 248 A1**
(43) Date of publication of application: **10.08.2022**
(21) Application number: 20871521.9
(22) Date of filing: 29.09.2020
(51) Int. Cl.: G05B 23/02

(54) **INFORMATION POROCESSING DEVICE, CALCULATION METHOD, AND CALCULATION PROGRAM**

(30) Priority: 30.09.2019 JP 2019180556
(71) Applicant: NTT Communications Corporation, Tokyo 100-8019 (JP)
(72) Inventor: KOYAMA, Kazuki, Tokyo 100-8019 (JP); OKAWACHI, Tomomi, Tokyo 100-8019 (JP); IZUMITANI, Tomonori, Tokyo 100-8019 (JP); KIRITOSHI, Keisuke, Tokyo 100-8019 (JP)
(74) Representative: Hoffmann Eitle
(86) International application number: PCT/JP2020/037028
(87) International publication number: WO 2021/065961

(57) **Abstract**

An information processing device (10) obtains a plurality of sets of data related to a processing target; groups the obtained sets of data based on group information set in advance; calculates the degrees of importance indicating the strengths of the cause-and-effect relationships among the sets of data included in each group; and calculates, based on a precision matrix and the degrees of importance of a plurality of sets of data, estimation values indicating the cause-and-effect relationships among the sets of data.

## Description

### [Technical Field]

The present invention is related to an information processing device, a calculation method, and a calculation program.

### [Background Art]

Conventionally, various methods have been proposed in which, based on the sensor data and the like collected from a factory or a manufacturing plant, the cause-and-effect relationships among the sets of data are estimated, and accordingly an attempt is made to resolve the issues such as anomaly detection and change-point detection.

For example, as an orthodox method, there is a widely-used method in which, under the premise that the data is based on the normal distribution, a covariance matrix among a plurality of sets of measured sensor data is used or a precision matrix representing the inverse matrix of the covariance matrix is used, and the degree of cause-and-effect relationship between individual sets of sensor data is defined.

Moreover, a statistical method (for example, the graphical lasso) is widely known in which the method of sparse estimation (i.e., the method in which non-essential estimation values can be estimated to be "0") is implemented, and minute cause-and-effect relationships (or actually nonexistent cause-and-effect relationships) are sliced off. In the actual sensor data, noise is included in no small measure. However, as a result of performing sparse estimation, it can be expected to achieve enhancement in the noise robustness.

### [Citation List]

### [Non Patent Citation]

Non Patent Document 1: J. Friedman, T. Hastie, and R. Tibshirani. "Sparse inverse covariance estimation with the graphical lasso," Biostatistics (Biometrika Trust), 2008.
Non Patent Document 2: N. Shervashidze and F. Bach. "Learning the structure for structured sparsity." IEEE Transactions for Signal Processing, Vol. 63, No. 18, pp. 4894-4902, 2015.
Non Patent Document 3: J. Alexander, H. Gabor, and G. Norbert. "Graphical LASSO based Model Selection for Time Series," IEEE Sig. Proc. Letters, 2015.

### [Summary of Invention]

### [Technical Problem]

However, in the related methods, there are times when the estimation values of the cause-and-effect relationships among the sets of data cannot be obtained with accuracy. For example, in regard to a real-life case, in a method based on the covariance matrix or in a related method such as the graphical lasso, the estimation values of the cause-and-effect relationships between individual sensors are estimated based on actual measured values that include noise and external factors. Hence, depending on the situation, the obtained result is often different than the know-how of the analyst.

Moreover, in a related method, regardless of the obtained result, there is a lack of ways for improvement and multifaceted reexamination. Thus, essentially, even if the obtained result is different than the above know-how, it is difficult to obtain any more information. The estimation values that are not directly linked to the know-how of the analyst not only prove difficult from the perspective of interpretability but also give the analyst a sense of distrust about the method. Hence, such estimation values tend to be disregarded in the actual data analysis.

### [Solution to Problem]

In order to solve the above-described problems and achieve the object, an information processing device according to the present invention includes: an obtaining unit configured to obtain a plurality of sets of data related to a processing target; and a calculating unit configured to group relationships among the sets of data that are obtained by the obtaining unit, based on group information set in advance, calculate degrees of importance indicating strengths of cause-and-effect relationships among sets of data included in each group, and calculate, based on the degrees of importance, estimation values indicating the cause-and-effect relationships among sets of data.

A calculation method according to the present invention is a calculation method implemented in an information processing device, and includes: an obtaining step for obtaining a plurality of sets of data related to a processing target; and a calculating step for grouping relationships among the sets of data that are obtained at the obtaining step, based on group information set in advance, calculating degrees of importance indicating strengths of cause-and-effect relationships among sets of data included in each group, and calculating, based on the degrees of importance, estimation values indicating the cause-and-effect relationships among sets of data.

A calculation program according to the present invention causes a computer to execute: an obtaining step for obtaining a plurality of sets of data related to a processing target; and a calculating step for grouping relationships among the sets of data that are obtained at the obtaining step, based on group information set in advance, calculating degrees of importance indicating strengths of cause-and-effect relationships among sets of data included in each group, and calculating, based on the degrees of importance, estimation values indicating the cause-and-effect relationships among sets of data.

### [Advantageous Effects of Invention]

According to the present invention, the estimation values of the cause-and-effect relationships among the sets of data can be obtained with accuracy.

### [Brief Description of Drawings]

FIG. 1 is a block diagram illustrating an exemplary configuration of an information processing device according to a first embodiment.
FIG. 2 is a diagram for explaining the overview of an anomaly prediction operation performed by the information processing device.
FIG. 3 is a diagram for explaining about the cause-and-effect relationships among the sets of data.
FIG. 4 is a diagram for explaining the statistical basis of the cause-and-effect relationships among the sets of data.
FIG. 5 is a diagram for explaining an operation of estimating the cause-and-effect relationships among the sets of data.
FIG. 6 is a flowchart for explaining an example of a calculation operation performed in the information processing device according to the first embodiment.
FIG. 7 is a diagram illustrating a computer that executes a calculation program.

### [Embodiments for Carrying Out the Invention]

An exemplary embodiment of an information processing device, a calculation method, and a calculation program according to the application concerned is described below in detail with reference to the accompanying drawings. However, the information processing device, the calculation method, and the calculation program according to the application concerned are not limited by the embodiment described below.

### [First embodiment]

The following explanation is given about a configuration of an information processing device 10 according to a first embodiment and a flow of operations performed in the information processing device 10. Lastly, the explanation is given about the effects achieved according to the first embodiment.

### [Configuration of information processing device]

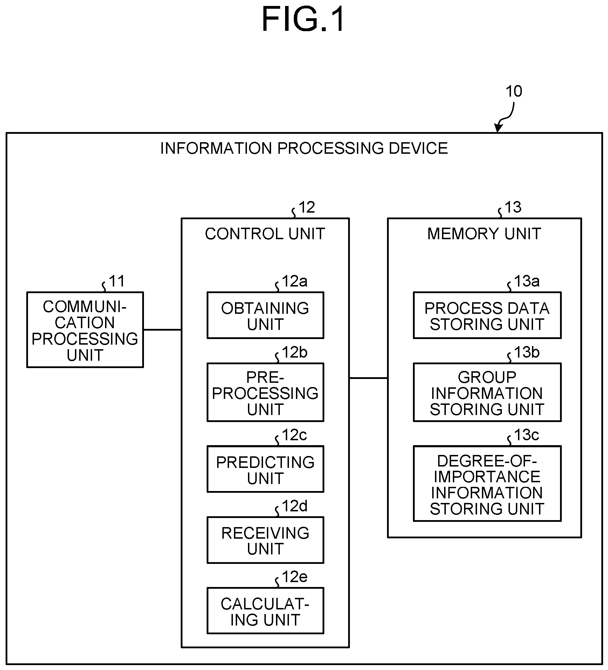

Firstly, explained below with reference to FIG. 1 is a configuration of the information processing device 10. FIG. 1 is a block diagram illustrating an exemplary configuration of the information processing device according to the first embodiment. For example, the information processing device 10 collects a plurality of sets of data obtained by sensors that are installed in a monitoring target facility such as a factory or a manufacturing plant; treats the collected sets of data as the input; and, using an already-learnt model (a calculation model) meant for predicting any anomaly in the monitoring target facility, outputs a frame anomaly evaluation value as an output value representing the degree of anomaly of the monitoring target facility.

Moreover, from the sets of data obtained by the sensors, the information processing device 10 estimates the cause-and-effect relationships among the sets of data. The data used at that time needs not necessarily be paradigmatic data (for example, time-series data).

In the information processing device 10, according to the likelihood of having (or not having) the cause-and-effect relationship, the analyst groups, in advance, specific relationships among a plurality of sensors or groups, in advance, a plurality of relationships; and the cause-and-effect relationships are compared in accordance with the grouping, and a sparse estimation solution is calculated. Meanwhile, it is assumed that the grouping is allowed to have duplication.

That is, based on the personal know-how of the analyst, with respect to the relationship between arbitrary sensors, the analyst becomes able to specify a plurality of groupings believed to include cause-and-effect relationships and accordingly perform the analysis. In the first embodiment, a plurality of groupings input in advance by the analyst can be compared with each other, and as a result it eventually becomes possible to obtain the extent values of individual cause-and-effect relationships and to obtain the information about the degrees of importance of the grouping itself (i.e., how good or how bad is each group) .

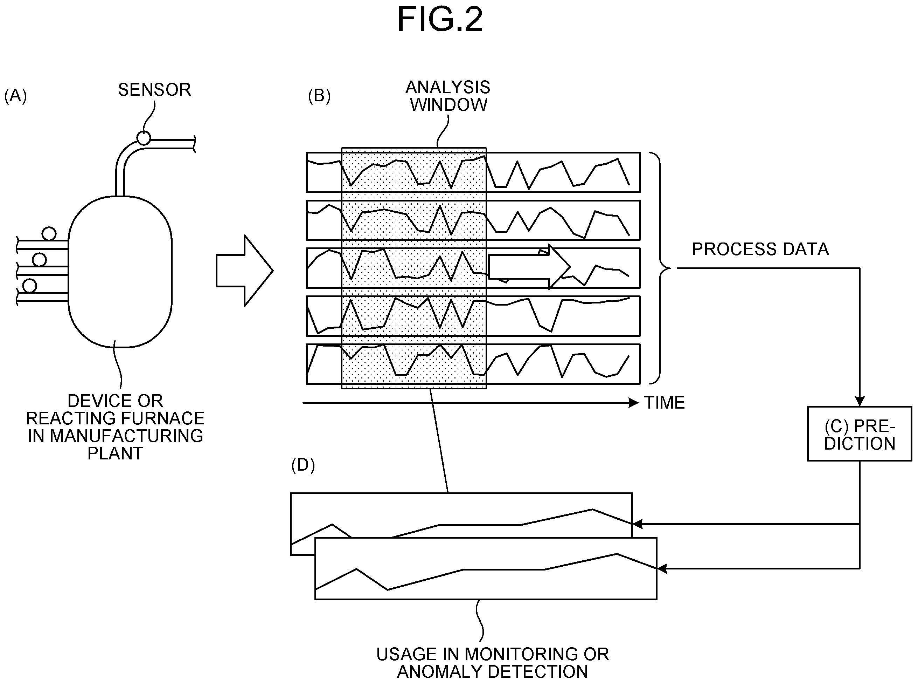

Explained below with reference to FIG. 2 is the overview of an anomaly prediction operation performed by the information processing device 10. FIG. 2 is a diagram for explaining the overview of the anomaly prediction operation performed by the information processing device.

In (A) in FIG. 2, it is illustrated that sensors or operational-signal collection devices are attached to a reacting furnace or a device in a manufacturing plant, and data is collected at regular intervals. In (B) in FIG. 2, it is illustrated that process data is plotted for each item (process); and the information processing device 10 clips the data within an analysis window (a hatched portion). Herein, the premise is that anomaly detection or change-point detection is performed using the degrees of change occurring in the cause-and-effect relationships, which are based on the data within the window, when the window is slid along the time. Since this operation represents preprocessing in accordance with the objective of the analyst, it is not always necessary to use an analysis window.

Based on the numerical values extracted from the process data, the information processing device 10 calculates the evaluation values of the cause-and-effect relationships among individual sets of data representing the prediction target (see (C) in FIG. 2). In (D) in FIG. 2, the evaluation values obtained by evaluating the cause-and-effect relationships in (C) are plotted. Herein, the predicted evaluation values of the cause-and-effect relationships, which are calculated at regular intervals by sliding the analysis window, are plotted. For example, when introduced in a manufacturing plant, the information processing device 10 is expected to use the plotting and predict the cause-and-effect relationships among a plurality of sets of current data; or it is expected that the information processing device 10 is applied for anomaly detection or change-point detection in which an alarm is issued when a predicted cause-and-effect relationship deviates from a range of values set in advance

As illustrated in FIG. 1, the information processing device 10 includes a communication processing unit 11, a control unit 12, and a memory unit 13. Given below is the explanation of the constituent elements of the information processing device 10.

The communication processing unit 11 controls the communication of a variety of information communicated with the connected devices. The memory unit 13 is used to store the data requested in various operations performed by the control unit 12, and to store programs. The memory unit 13 includes a process data storing unit 13a, a group information storing unit 13b, and a degree-of-importance information storing unit 13c. For example, the memory unit 13 is a memory device such as a semiconductor memory device that can be a RAM (Random Access Memory) or a flash memory.

The process data storing unit 13a is used to store the process data obtained by an obtaining unit 12a. For example, in the process data storing unit 13a, at least the latest process data equivalent to frames within a predetermined duration is stored as process data.

The group information storing unit 13b is used to store group information maintained for a plurality of sensors. For example, the group information storing unit 13b is used to store group information that is set in advance by the analyst and that is to be used in setting groups of a plurality of sensors according to the likelihood of having (or not having) the cause-and-effect relationships.

The degree-of-importance information storing unit 13c is used to store the degree of importance of each group as calculated by a calculating unit 12e, and to store the estimation values representing the cause-and-effect relationships among the sets of data. In the degree-of-importance information storing unit 13c, scores indicating the strengths of the cause-and-effect relationships between the sets of data included in each group are stored as the degrees of importance. Moreover, in the degree-of-importance information storing unit 13c, the estimation solution of a sparse precision matrix, which is in accordance with the groups set in advance, is stored as the estimation values.

The control unit 12 includes an internal memory for storing the programs in which various operation sequences are defined, and for storing the requested data; and performs various operations using such stored information. For example, the control unit 12 includes the obtaining unit 12a, a preprocessing unit 12b, a predicting unit 12c, a receiving unit 12d, and the calculating unit 12e. The control unit 12 is, for example, an electronic circuit such as a CPU (Central Processing Unit), an MPU (Micro Processing Unit), or a GPU (Graphical Processing Unit); or an integrated circuit such as an ASIC (Application Specific Integrated Circuit) or an FPGA (Field Programmable Gate Array).

The obtaining unit 12a obtains a plurality of sets of data related to the processing target. For example, the obtaining unit 12a receives, in a periodical manner (for example, after every one minute), numerical value data of a multivariate time series from the sensors installed in the monitoring target facility such as a factory or a manufacturing plant; and stores the received data in the process data storing unit 13a. Herein, the data obtained by the sensors contains a variety of data such as temperature, pressure, sound, and vibrations in a device or a reacting furnace of a factory or a manufacturing plant representing the monitoring target facility.

Hereinafter, the time-series data obtained by the sensors is referred to as process data. Meanwhile, the data obtained by the obtaining unit 12a is not limited to the data obtained by the sensors, and can also include numerical value data that is manually input.

The preprocessing unit 12b performs predetermined preprocessing of the time-series data obtained by the obtaining unit 12a. For example, the preprocessing unit 12b can clip the process data of a predetermined width and, regarding the values included in the process data in the clipped width, can calculate a representative value (the average value) on a sensor-by-sensor basis. Meanwhile, the operations of the preprocessing unit 12b can also be skipped.

The predicting unit 12c treats the time-series data, which is obtained by the obtaining unit 12a, as the input; and outputs predetermined output values using an already-learnt model meant for predicting the state of the monitoring target facility. For example, when the time-series data is processed by the preprocessing unit 12b, the predicting unit 12c inputs the processed time-series data in the already-learnt model, and predicts the state of the monitoring target facility after a certain period of time set in advance.

For example, the predicting unit 12c treats, as the input, the time-series data of each sensor as obtained by the obtaining unit 12a; and predicts the state of the monitoring target facility using an already-learnt model in which the group-by-group degrees of importance calculated by the calculating unit 12e (explained later) and the estimation values indicating the cause-and-effect relationships among the sets of data are taken into account. Meanwhile, the already-learnt model used by the predicting unit 12c can be any arbitrary type of model, and the method for prediction can be any arbitrary method.

The receiving unit 12d receives the setting of the group information. For example, the receiving unit 12d receives, as the group information, the setting for grouping the individual elements in a precision matrix that represents the inverse matrix of the covariance matrix estimated from a plurality of sets of data obtained by the obtaining unit 12a. Then, the receiving unit 12d stores the received group information in the group information storing unit 13b.

The calculating unit 12e groups a plurality of sets of data, which is obtained by the obtaining unit 12a, based on the group information set in advance; calculates the group-by-group degrees of importance indicating the strengths of the cause-and-effect relationships among the sets of data included in each group; and calculates the estimation values indicating the cause-and-effect relationships based on the precision matrix and the degrees of importance among a plurality of sets of data.

For example, the calculating unit 12e treats a plurality of sets of data, which is obtained by the obtaining unit 12a, and the group information as the input; and calculates the degrees of importance and the estimation values using an already-learnt model (a calculation model) meant for estimating the degrees of importance and the estimation values. Meanwhile, the method for calculating the degree of importance and the estimation value for each group can be any arbitrary method. For example, the information processing device 10 implements the technology of the latent group lasso (for example, refer to Non Patent Document 1), and calculates the degree of importance of each group and the estimation solution indicating the cause-and-effect relationships among the sets of data based on the degree of importance of each group.

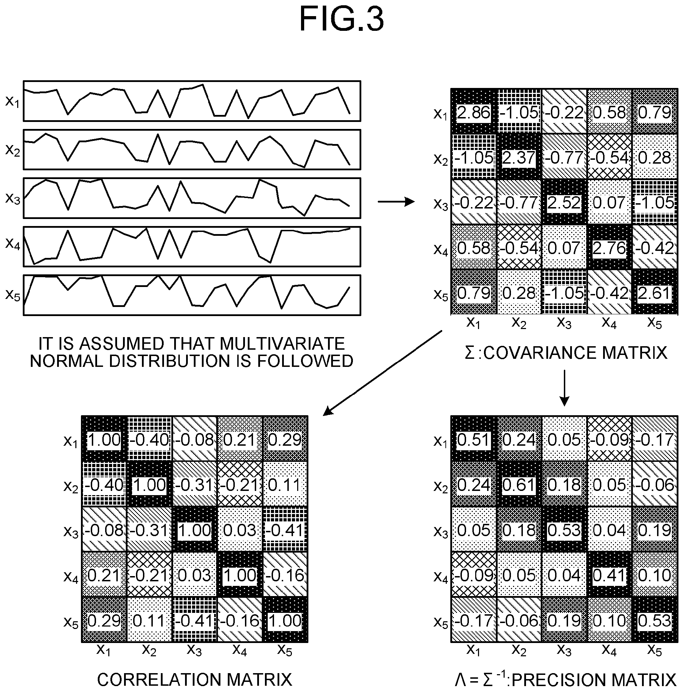

Explained below with reference to FIG. 3 is the cause-and-effect relationship among the sets of data to be solved according to the first embodiment. FIG. 3 is a diagram for explaining about the cause-and-effect relationships among the sets of data. As illustrated in FIG. 3, firstly, in the method for estimating the cause-and-effect relationships among the sets of data, it is assumed that multivariate data to be analyzed is generated according to a multivariate normal distribution.

At that time, a covariance matrix can be easily estimated from the observation data, and the matrix obtained by scaling the covariance matrix with the dispersion of individual sets of data (in a covariance matrix, the dispersion is equivalent to the diagonal elements) represents a correlation matrix. Herein, the inverse matrix of a covariance matrix is called a precision matrix. The individual elements of the precision matrix are assumed to represent the cause-and-effect relationships between the individual sets of observation data to be figured out according to the first embodiment.

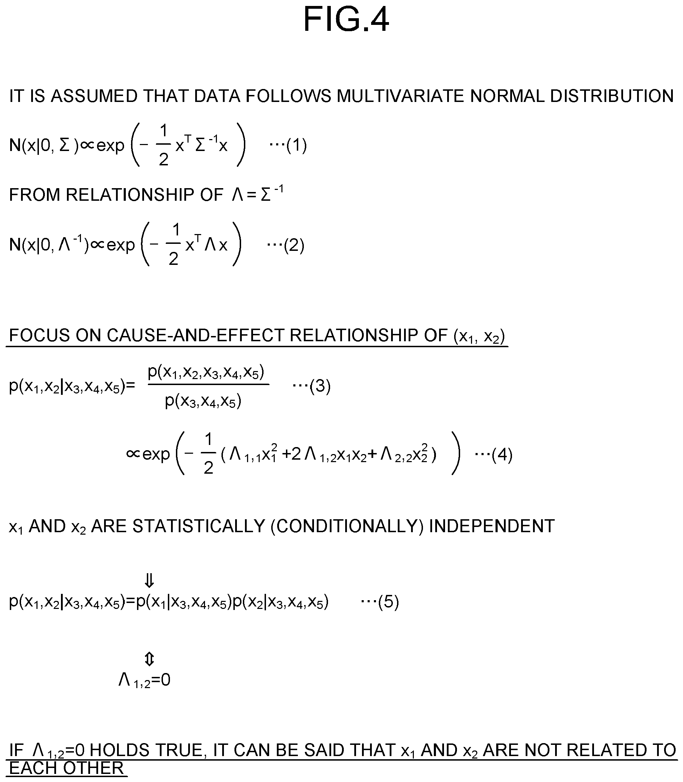

Subsequently, with reference to FIG. 4, the statistical basis of the "cause-and-effect relationships" is explained in brief. FIG. 4 is a diagram for explaining the statistical basis of the cause-and-effect relationships among the sets of data. Firstly, if it is assumed that the sets of data follow the multivariate normal variation, then the generation probability of individual sets of data can be written using a covariance matrix or a precision matrix (see (1) and (2) in FIG. 4). Herein, the focus is particularly on the cause-and-effect relationship between data x₁ and data x₂.

When other sets of data other than the data x₁ and the data x₂ are provided (i.e., when data x₃, data x₄, and data x₅) are provided, the conditional joint probability of the data x₁ and the data x₂ can be written as (3) illustrated in FIG. 4. The format can be such that the information other than the data x₁ and the data x₂, which are of particular interest at present, can be omitted (see (4) in FIG. 4). The omitted members are not relevant in the cause-and-effect relationship between the data x₁ and the data x₂. When the data x₁ and the data x₂ are independent of each other, the conditional joint probability of the data x₁ and the data x₂ can be written as the product of the conditional probability of the data x₁ and the conditional probability of the data x₂ as given in (5) illustrated in FIG. 4. With reference to the abovementioned formula of the conditional joint probability of the data x₁ and the data x₂, the same value as Λ12=0 is obtained. As a result, if Λ12=0 holds true, it can be argued that the data x₁ and the data x₂ are not related to each other. More precisely, nonrelation can be argued from the perspective of a gaussian graphical model.

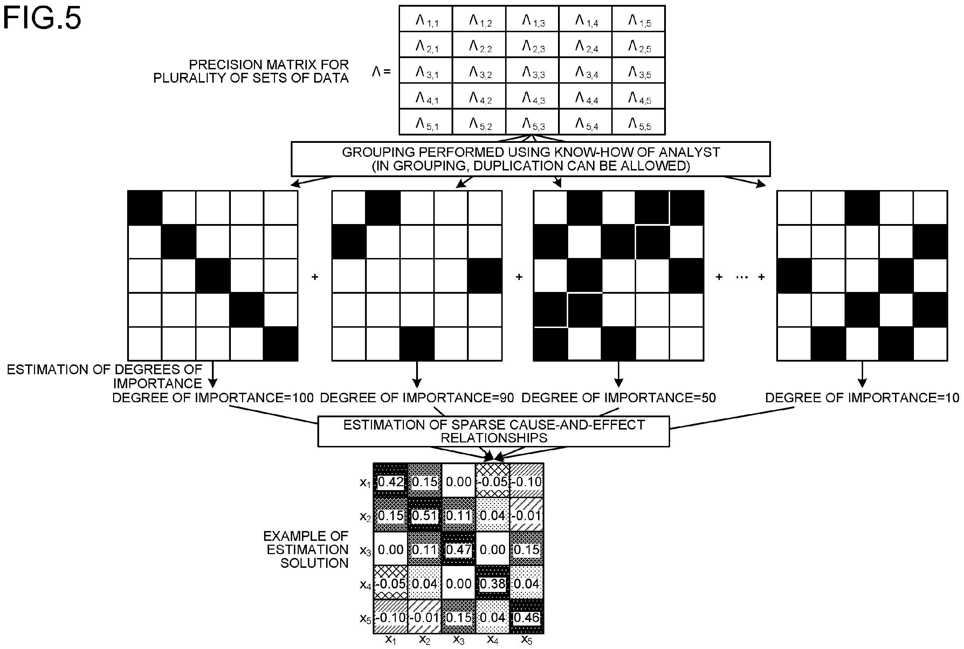

Explained below with reference to FIG. 5 is an operation by which the information processing device 10 estimates the cause-and-effect relationships among sets of data. FIG. 5 is a diagram for explaining the operation of estimating the cause-and-effect relationships among the sets of data. The information processing device 10 performs sparse estimation of a precision matrix, which is defined from the observation data, according to the graphical lasso. At that time, based on the previous knowledge of the analyst, the individual elements of the precision matrix can be grouped, and a sparse estimation solution of the precision matrix can be obtained in accordance with that group structure set in advance.

For example, as illustrated in FIG. 5, the information processing device 10 receives the setting of the grouping that the analyst performed with respect to the elements having comparable cause-and-effect relationships, while referring to the precision matrix of a plurality of sets of data. As a specific example, for example, if the analyst determines that the cause-and-effect relationship between sensors A and B and the cause-and-effect relationship between sensors C and E are equally high, then the pair of sensors A and B and the pair of sensors C and E are set in the same group.

Moreover, for example, if the analyst determines that the cause-and-effect relationship between the sensors A and C, the cause-and-effect relationship between sensors C and D, and the cause-and-effect relationship between sensors D and E are equally low; then the pair of sensors A and C, the pair of sensors B and E, the pair of sensors C and D, and the pair of sensors D and E are set in the same group.

That is, based on the know-how or the already-gained knowledge of the analyst, grouping can be performed according to the likelihood of having the cause-and-effect relationship between individual sets of data. Meanwhile, in the grouping, either duplication can be allowed, or a single element can be treated as one group. However, it is ensured that each element of the precision matrix belongs to some group.

For example, the information processing device 10 inputs the sensor data and the group information in a calculation model; and obtains, as the output values of the calculation model, the degree of importance of each group and the estimation solution indicating the sparse cause-and-effect relationships that can be compared with the precision matrix.

In the information processing device 10, for example, the technology of the latent group lasso can be implemented so that, based on the group information set in advance, the degree of importance of each individual group can be evaluated by performing appropriate scaling. At that time, regarding the elements of the precision matrix that belong to a group determined to be redundant (i.e., a group having relatively low degree of importance), the elements are estimated to be "0". Moreover, in the information processing device 10, for example, as a result of allowing duplication, if a particular element happens to belong to a plurality of groups and if that element is estimated to be important in at least one or more groups, then that element is estimated to be "0".

In the information processing device 10, the know-how of the analyst can be reflected, and sparse cause-and-effect relationships can be calculated with high accuracy by slicing off the redundant cause-and-effect relationships. For that reason, in the information processing device 10, it becomes possible to get to know, with clarity, the cause-and-effect relationships to be analyzed.

### [Flow of operations performed in information processing device]

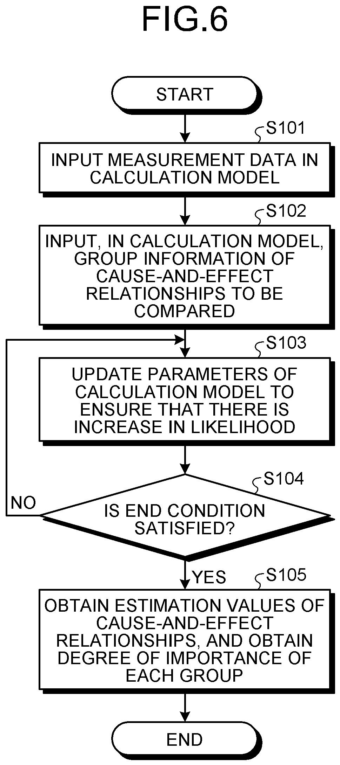

Explained below with reference to FIG. 6 is an example of the flow of operations performed in the information processing device 10 according to the first embodiment. FIG. 6 is a flowchart for explaining an example of the calculation operation performed in the information processing device according to the first embodiment.

As illustrated in FIG. 6, the information processing device 10 inputs measurement data, which is measured by sensors, in a calculation model (Step S101); and inputs, in the calculation model, the group information of the cause-and-effect relationships to be compared (Step S102) .

Then, the information processing device 10 updates the parameters of the calculation model in such a way that there is an increase in the likelihood (Step S103), and determines whether a predetermined end condition is satisfied (Step S104). If it is determined that the predetermined end condition is not satisfied (No at Step S104), then the system control returns to Step S103 and the information processing device 10 repeatedly updates the parameters of the calculation model until the predetermined end condition is satisfied.

When the predetermined end condition is satisfied (Yes at Step S104), the information processing device 10 obtains the estimation values of the cause-and-effect relationships, and obtains the degree of importance of each group (Step S105) .

### [Effect of first embodiment]

The information processing device 10 according to the first embodiment obtains a plurality of sets of data related to the processing target; groups the obtained sets of data based on the group information set in advance; and calculates the degrees of importance indicating the strengths of the cause-and-effect relationships among the sets of data included in each group. Moreover, based on a precision matrix and based on the degrees of importance of a plurality of sets of data, the information processing device 10 calculates estimation values indicating the cause-and-effect relationships. For that reason, the information processing device 10 becomes able to accurately obtain the estimation values of the cause-and-effect relationships among the sets of data.

In the information processing device 10 according to the first embodiment, according to the likelihood of having (or not having) the cause-and-effect relationships that represents the know-how of the analyst, particular relationships or a plurality of relationships among a plurality of sensors can be grouped in advance; the cause-and-effect relationships can be compared in accordance with the groups; and a sparse estimation solution can be obtained. Based on the know-how, the analyst can analyze the relationships among arbitrary sensors by specifying a plurality of groups believed to likely have the cause-and-effect relationships. In the information processing device 10, a plurality of groups input in advance by the analyst can be compared with each other, and as a result it eventually becomes possible to obtain the extent values of individual cause-and-effect relationships and to obtain the information about the degrees of importance of the grouping itself (i.e., how good or how bad is each group).

In the information processing device 10, as compared to a related method, not only it becomes possible to obtain a highly accurate estimation solution of the cause-and-effect relationships; but it also become possible to avail sparse estimation and obtain a sparse estimation solution by slicing off the redundant and non-essential cause-and-effect relationships to "0". Moreover, because of the reason explained above, the information processing device 10 can be expected to be able to perform natural estimation in line with the understanding of the analyst and without wasting the know-how of the analyst. As a result, the interpretability and the reliability of the method can be enhanced, and the analysis result can be upgraded to be more in line with the practical benefits. For example, a method is known for performing anomaly detection or change-point detection using the covariance matrix of a plurality of sets of data. Instead, if a sparse and high-precision precision matrix (or a corresponding matrix) that is estimated based on the first embodiment can be alternatively used to perform anomaly detection or change-point detection as in the case of a related method, the detection accuracy can also be enhanced.

Moreover, in the information processing device 10, even without having any exceptional know-how, the analyst can expand the scope of the analysis from various perspectives. For example, initially, the analyst can perform the grouping in a blatant manner by guesswork and can confirm the degrees of importance of the grouping, before trying out some different grouping. Alternatively, firstly, the analyst can estimate the cause-and-effect relationships (a covariance matrix or a precision matrix) according to a related method; and, based on the estimation result, can group the sections to be confirmed distinctly and in detail or can group the points believed to be clearly different.

### [System configuration]

The constituent elements of the device illustrated in the drawings are merely conceptual, and need not be physically configured as illustrated. The constituent elements, as a whole or in part, can be separated or integrated either functionally or physically based on various types of loads or use conditions. The process functions implemented in the device are entirely or partially realized by a CPU or a GPU or by computer programs that are analyzed and executed by a CPU or a GPU, or are realized as hardware by wired logic.

Of the processes described in the embodiments, all or part of the processes explained as being performed automatically can be performed manually. Similarly, all or part of the processes explained as being performed manually can be performed automatically by a known method. The processing procedures, the control procedures, specific names, various data, and information including parameters described in the embodiments or illustrated in the drawings can be changed as requested unless otherwise specified.

### [Program]

The operations performed in the information processing device according to the embodiment described above can be written as a program in a computer-executable language. For example, the operations performed in the information processing device 10 according to the embodiment can be written as a calculation program in a computer-executable language. In that case, when a computer executes the calculation program, the effects identical to the embodiment described above can be achieved. Moreover, the calculation program can be recorded in a computer-readable recording medium, and a computer can be made to read the calculation program from the recording medium and execute the calculation program, so as to perform operations explained in the embodiment.

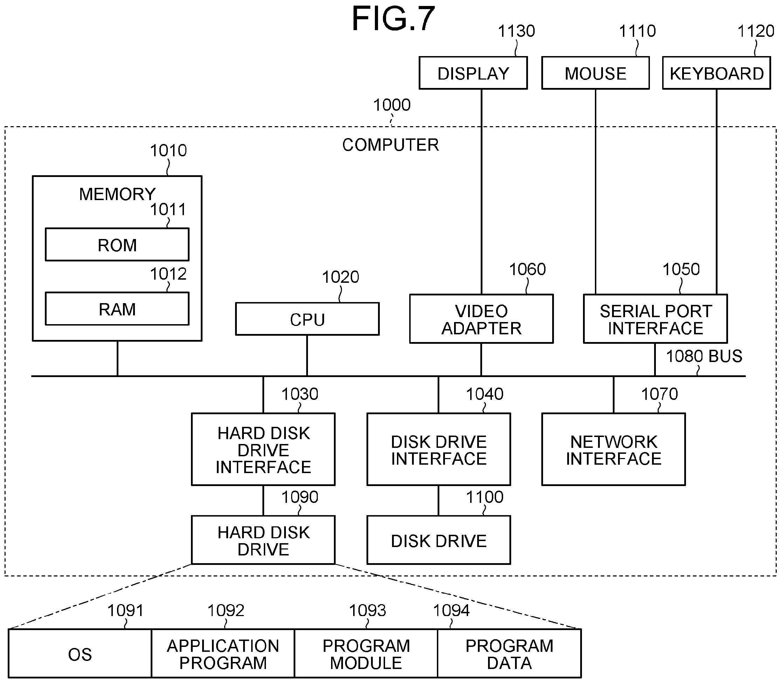

FIG. 7 is a diagram illustrating a computer that executes the calculation program. As illustrated in FIG. 7, a computer 1000 includes a memory 1010, a CPU 1020, a hard disk drive interface 1030, a disk drive interface 1040, a serial port interface 1050, a video adapter 1060, and a network interface 1070; and those constituent elements are connected by a bus 1080.

As illustrated in FIG. 7, the memory 1010 includes a ROM (Read Only Memory) 1011 and a RAM 1012. The ROM 1011 is used to store, for example, a boot program such as the BIOS (Basic Input Output System). As illustrated in FIG. 7, the hard disk drive interface 1030 is connected to a hard disk drive 1090. Moreover, as illustrated in FIG. 7, the disk drive interface 1040 is connected to a disk drive 1100. For example, a detachably-attachable memory medium such as a magnetic disk or an optical disk is inserted in the disk drive 1100. Furthermore, as illustrated in FIG. 7, the serial port interface 1050 is connected to, for example, a mouse 1110 and a keyboard 1120. Moreover, as illustrated in FIG. 7, the video adapter 1060 is connected to, for example, a display 1130.

Furthermore, as illustrated in FIG. 7, the hard disk drive 1090 is used to store an OS 1091, an application program 1092, a program module 1093, and program data 1094. That is, the calculation program is stored in, for example, the hard disk drive 1090 as a program module in which instructions to be executed by the computer 1000 are written.

Meanwhile, the variety of data explained in the embodiment is stored as program data in, for example, the memory 1010 or the hard disk drive 1090. The CPU 1020 reads the program module 1093 or the program data 1094 from the memory 1010 or the hard disk drive 1090 into the RAM 1012 as may be necessary, and performs various operations.

The program module 1093 and the program data 1094 related to the calculation program are not limited to being stored in the hard disk drive 1090. Alternatively, for example, the program module 1093 and the program data 1094 can be stored in a detachably-attachable memory medium and can be read by the CPU 1020 via a disk drive. Still alternatively, the program module 1093 and the program data 1094 related to the calculation program can be stored in another computer connected via a network (such as a LAN (Local Area Network) or a WAN (Wide Area Network) Then, the program module 1093 and the program data 1094 can be read by the CPU 1020 via the network interface 1070.

Meanwhile, the embodiment and the modification examples thereof are to be construed as embodying all modifications and alternative constructions that may occur to one skilled in the art that fairly fall within the basic teaching herein set forth.

### [Explanation of Reference]

- 10: information processing device

- 11: communication processing unit
- 12: control unit
- 12a: obtaining unit
- 12b: preprocessing unit
- 12c: predicting unit
- 12d: receiving unit
- 12e: calculating unit
- 13: memory unit
- 13a: process data storing unit
- 13b: group information storing unit
- 13c: degree-of-importance information storing unit

## Claims

1. An information processing device comprising:
an obtaining unit configured to obtain a plurality of sets of data related to a processing target; and
a calculating unit configured to
group relationships among the sets of data that are obtained by the obtaining unit, based on group information set in advance,
calculate degrees of importance indicating strengths of cause-and-effect relationships among sets of data included in each group, and
calculate, based on the degrees of importance, estimation values indicating the cause-and-effect relationships among sets of data.

2. The information processing device according to claim 1, further including a receiving unit configured to receive setting of the group information.

3. The information processing device according to claim 2, wherein the receiving unit is configured to receive, as the group information, setting for grouping individual elements in a precision matrix, which is an inverse matrix of a covariance matrix that is estimated from the plurality of sets of data obtained by the obtaining unit.

4. The information processing device according to claim 1, wherein the calculating unit is configured to
treat the plurality of sets of data that are obtained by the obtaining unit, and the group information as input,
use a calculation model meant for calculating the degrees of importance and the estimation values, and
calculate the degrees of importance and the estimation values.

5. The information processing device according to claim 1, further including a predicting unit configured to
treat time-series data that is obtained by the obtaining unit, as input,
use an already-learnt model meant for predicting state of the processing target, and
output a predetermined output value.

6. A calculation method implemented in an information processing device, comprising:
an obtaining step for obtaining a plurality of sets of data related to a processing target; and
a calculating step for
grouping relationships among the sets of data that are obtained at the obtaining step, based on group information set in advance,
calculating degrees of importance indicating strengths of cause-and-effect relationships among sets of data included in each group, and
calculating, based on the degrees of importance, estimation values indicating the cause-and-effect relationships among sets of data.

7. A calculation program that causes a computer to execute:
an obtaining step for obtaining a plurality of sets of data related to a processing target; and
a calculating step for
grouping relationships among the sets of data that are obtained at the obtaining step, based on group information set in advance,
calculating degrees of importance indicating strengths of cause-and-effect relationships among sets of data included in each group, and
calculating, based on the degrees of importance, estimation values indicating the cause-and-effect relationships among sets of data.
